# EUROPEAN PATENT APPLICATION

(11) **EP 4 455 633 A1**
(43) Date of publication of application: **30.10.2024**
(21) Application number: 22923092.5
(22) Date of filing: 22.04.2022
(51) Int. Cl.: G01N 11/06, B08B 9/087, B08B 1/04

(54) **MELT FLOW RATE TESTING DEVICE**

(30) Priority: 25.01.2022 CN 202210090578
(71) Applicant: National Industrial Innovation Center of Polymer Materials Co., Ltd, Guangzhou Hi-Tech Industrial Development Zone Guangzhou, Guangdong 510663 (CN)
(72) Inventor: WU, Bo, Guangzhou, Guangdong 510663 (CN); CHENG, Chunfeng, Guangzhou, Guangdong 510663 (CN); PANG, Chenghuan, Guangzhou, Guangdong 510663 (CN); YE, Nanbiao, Guangzhou, Guangdong 510663 (CN); YU, Lang, Guangzhou, Guangdong 510663 (CN)
(74) Representative: Petraz, Gilberto Luigi
(86) International application number: PCT/CN2022/088419
(87) International publication number: WO 2023/142274

(57) **Abstract**

Provided is a melt flow rate testing device, including a mounting platform (1), a pressing bar (7), and a cleaning rod (9), where a melt flow rate meter (2), a barrel cleaning assembly (3), a track driving assembly (4), a hopper assembly (6), a pressing bar cleaning assembly (8), a weighing assembly (10), a cleaning cloth pick-and-place assembly (11), a die replacement module (12), and a pressing assembly (13) are disposed on the mounting platform (1); a clamping assembly (5) is disposed on the track driving assembly (4); and a barrel (26) and a die located at a lower end of the barrel (26) are disposed on the melt flow rate meter (2), the pressing assembly (13) is configured to drive the pressing bar (7) to extend into the barrel (26) during feeding, the barrel cleaning assembly (3) is configured to drive the cleaning rod (9) to extend into the barrel (26) to clean the barrel (26), and the cleaning cloth pick-and-place assembly (11) is configured to place a cleaning cloth at an upper end of the barrel (26) before the cleaning rod (9) extends into the barrel (26). The melt flow rate testing device has high degree of automation, and solves the problem of impact on a test result due to a big manual operation error.

## Description

### TECHNICAL FIELD

The present invention relates to the field of performance detection technologies for polymer materials, in particular to a melt flow rate testing device.

### BACKGROUND

The melt flow rate is used to determine the fluidity of a polymer material in a molten state. As a basis for material quality monitoring in the later stage and selection of molding process condition parameters, the melt flow rate of the polymer material usually needs to be tested using a melt flow rate meter. At present, an existing melt flow rate meter has the following drawbacks during testing:
During testing, the processes of feeding, pressing, cleaning, etc. all need to be completed manually. Due to many process actions and influencing factors in testing of the melt flow rate, there will be great differences in operations by the same person at different time and by different persons in each process during manual testing, resulting in great fluctuation and poor repeatability of test results.

### SUMMARY

An objective of the present invention is to provide a melt flow rate testing device with high degree of automation, so as to solve the problem of impact on a test result due to a big manual operation error.

To achieve the above objective, the present invention provides a melt flow rate testing device, including a mounting platform, a pressing bar, and a cleaning rod, where a melt flow rate meter, a barrel cleaning assembly, a track driving assembly, a hopper assembly, a pressing bar cleaning assembly, a weighing assembly, a cleaning cloth pick-and-place assembly, a die replacement module, and a pressing assembly are disposed on the mounting platform;
the track driving assembly is provided with a clamping assembly; and
the melt flow rate meter is provided with a barrel and a die located at a lower end of the barrel, the pressing assembly is configured to drive the pressing bar to extend into the barrel during feeding, the barrel cleaning assembly is configured to drive the cleaning rod to extend into the barrel to clean the barrel, and the cleaning cloth pick-and-place assembly is configured to place a cleaning cloth at an upper end of the barrel before the cleaning rod extends into the barrel.

Further, the melt flow rate meter includes a control platform, where a heating furnace is disposed on the control platform, a die baffle insertion-and-extraction cylinder is disposed on one side of the heating furnace, a weight loading platform is disposed above the heating furnace, a displacement sensor is disposed on an upper surface of the heating furnace, the barrel is located in the heating furnace, and the melt flow rate meter further includes a test pressing rod placed in the barrel during testing.

Further, the melt flow rate testing device above further includes a code scanner disposed on the hopper assembly.

Further, the clamping assembly includes a pressing bar pick-and-place component and a feeding component, where the track driving assembly is configured to drive the pressing bar pick-and-place component to move between the pressing bar cleaning assembly and the pressing assembly, and the track driving assembly is further configured to drive the feeding component to move between the hopper assembly and the melt flow rate meter; and
the track driving assembly includes two X-axis moving tracks distributed in parallel, where a Y-axis moving track is disposed between the two X-axis moving tracks, a Z-axis moving track is disposed on the Y-axis moving track, and the pressing bar pick-and-place component and the feeding component are connected to the Z-axis moving track separately.

Further, the hopper assembly includes a hopper support, where a storage hopper group is disposed on the hopper support, a feeding hopper is disposed below the storage hopper group, and a heating apparatus is disposed below the feeding hopper.

Further, the pressing bar cleaning assembly includes a fixed support, a cleaning belt, a cleaning belt positioning apparatus, and a driving component for driving the cleaning belt to rotate.

Further, the cleaning cloth pick-and-place assembly includes a motion mechanism and a suction cup disposed on the motion mechanism.

Further, the die replacement module includes a die frame, where a positioning cylinder is disposed on the die frame, a die clamp is disposed at one end of the positioning cylinder, an ejection cylinder is disposed on a side surface of the die clamp, and a die grabbing apparatus is disposed at one end of the die clamp.

Further, a placement rack for placing the test pressing rod is further disposed on the mounting platform.

Further, the mounting platform is further provided with a controller electrically connected to the melt flow rate meter, the barrel cleaning assembly, the track driving assembly, the clamping assembly, the pressing bar cleaning assembly, the weighing assembly, the cleaning cloth pick-and-place assembly, the die replacement module, and the pressing assembly, respectively.

Compared with the prior art, the melt flow rate testing device provided by the above technical solution has the following beneficial effects: the track driving assembly is disposed to drive the clamping assembly to move, the clamping assembly clamps a material from the hopper assembly and then automatically feeds the material into the barrel of the melt flow rate meter, and during feeding, the pressing assembly drives the pressing bar to compact the material in the barrel; during testing, the material falls from the die, and after the testing is completed, the falling material is placed on the weighing assembly for weighing; before feeding for next testing, the die replacement module is used to replace with a clean die, the cleaning cloth pick-and-place assembly places the cleaning cloth at the upper end of the barrel, the barrel cleaning assembly drives the cleaning rod to move down and brings the cleaning cloth into the barrel, the cleaning rod moves up and down to clean the barrel and then is moved out, and the next material testing is carried out; and the pressing bar cleaning assembly is used to clean the pressing bar, and the clamping assembly moves the cleaned pressing bar onto the pressing assembly. Therefore, the above melt flow rate testing device implements automation of feeding, pressing, and cleaning. Manual work is replaced with a machine, which ensures standardization of operation in testing, avoids a phenomenon of great differences in test results due to operations by the same person at different time and by different persons, and makes the test results more accurate.

### BRIEF DESCRIPTION OF DRAWINGS

FIG. 1 is a top view of a melt flow rate testing device in an embodiment of the present invention;
FIG. 2 is a schematic structural diagram of a melt flow rate meter in an embodiment of the present invention;
FIG. 3 is a schematic structural diagram of a track driving assembly in an embodiment of the present invention;
FIG. 4 is a schematic structural diagram of a hopper assembly in an embodiment of the present invention;
FIG. 5 is a schematic structural diagram of a pressing bar cleaning assembly in an embodiment of the present invention;
FIG. 6 is a schematic structural diagram of a cleaning cloth pick-and-place assembly in an embodiment of the present invention; and
FIG. 7 is a schematic structural diagram of a die replacement module in an embodiment of the present invention.

In the drawings: 1-mounting platform, 2-melt flow rate meter, 21-control platform, 22-heating furnace, 23-die baffle insertion-and-extraction cylinder, 24-weight loading platform, 25-displacement sensor, 26-barrel, 27-test pressing rod, 3-barrel cleaning assembly, 4-track driving assembly, 41-Y-axis moving track, 42-Z-axis moving track, 43-X-axis moving track, 5-clamping assembly, 51-pressing bar pick-and-place component, 52-feeding component, 6-hopper assembly, 61-hopper support, 62-storage hopper group, 63-feeding hopper, 64-heating apparatus, 7-pressing bar, 8-pressing bar cleaning assembly, 81-fixed support, 82-cleaning belt, 83-cleaning belt positioning apparatus, 9-cleaning rod, 10-weighing assembly, 11-cleaning cloth pick-and-place assembly, 111-motion mechanism, 112-suction cup, 12-die replacement module, 121-die frame, 122-positioning cylinder, 123-ejection cylinder, 124-die clamp, 125-die grabbing apparatus, 13-pressing assembly, and 14-code scanner.

### DETAILED DESCRIPTION OF EMBODIMENTS

Specific implementations of the present invention are further described in detail below in conjunction with the accompanying drawings and embodiments. The embodiments below are used to illustrate the present invention, but not to limit the scope of the present invention.

In the description of the present invention, it should be understood that the orientations or positional relationships indicated by the terms "center", "longitudinal", "transverse", "upper", "lower", "front", "rear", "left", "right", "vertical", "horizontal", "top", "bottom", "inner", "outer", etc. are based on the orientations or positional relationships shown in the accompanying drawings, merely for conveniently describing the present invention and simplifying the description, rather than indicating or implying that the apparatus or element referred to must have a particular orientation or be constructed and operated in a particular orientation, and therefore cannot be understood as limitations to the present invention. In addition, the terms "first" and "second" are only for descriptive purposes and cannot be understood as indicating or implying relative importance.

In the present invention, it is to be noted that the terms "mount" and "connection" should be understood in a broad sense, unless otherwise expressly specified and limited. For example, it may be a fixed connection, a detachable connection, or an integrated connection; it may be a mechanical connection or an electrical connection; and it may be being directly connected, being indirectly connected via an intermediate medium, or a communication between interiors of two elements. Those of ordinary skill in the art may understand specific meanings of the above terms in the present invention based on specific circumstances.

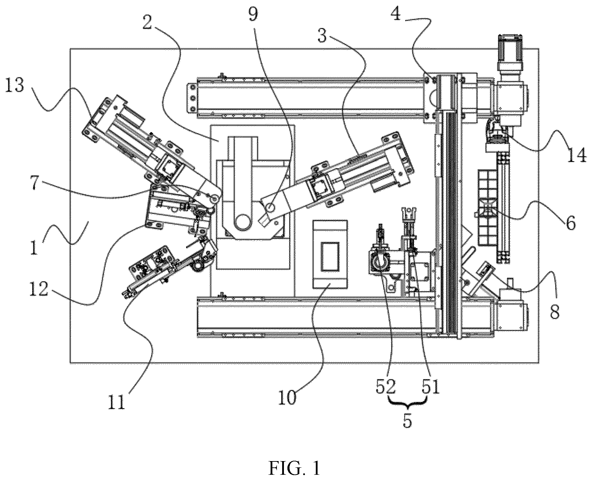

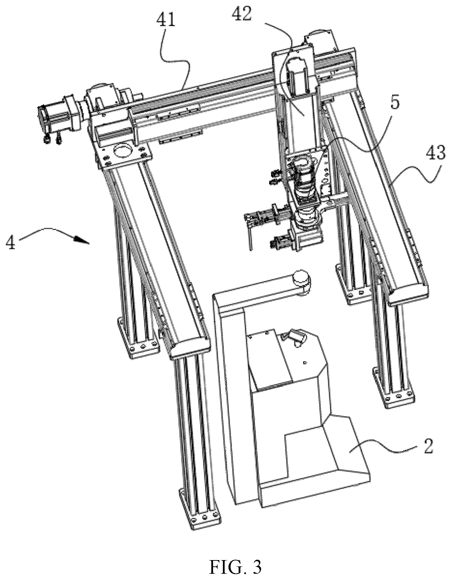

As shown in FIG. 1 to FIG. 7, an embodiment of the present invention provides a melt flow rate testing device, including a mounting platform 1, a pressing bar 7, and a cleaning rod 9, where a melt flow rate meter 2, a barrel cleaning assembly 3, a track driving assembly 4, a hopper assembly 6, a pressing bar cleaning assembly 8, a weighing assembly 10, a cleaning cloth pick-and-place assembly 11, a die replacement module 12, and a pressing assembly 13 are disposed on the mounting platform 1;
a clamping assembly 5 is disposed on the track driving assembly 4; and
a barrel 26 and a die located at a lower end of the barrel 26 are disposed on the melt flow rate meter 2, the pressing assembly 13 is configured to drive the pressing bar 7 to extend into the barrel 26 during feeding, the barrel cleaning assembly 3 is configured to drive the cleaning rod 9 to extend into the barrel 26 to clean the barrel 26, and the cleaning cloth pick-and-place assembly 11 is configured to place a cleaning cloth at an upper end of the barrel 26 before the cleaning rod 9 extends into the barrel 26.

Based on the above solution, the track driving assembly 4 is disposed to drive the clamping assembly 5 to move, the clamping assembly 5 clamps a material from the hopper assembly 6 and then automatically feeds the material into the barrel 26 of the melt flow rate meter 2, and during feeding, the pressing assembly 13 drives the pressing bar 7 to compact the material in the barrel 26; during testing, the material falls from the die, and after the testing is completed, the falling material is placed on the weighing assembly 10 for weighing; before feeding for next testing, the die replacement module 12 is used to replace with a clean die, the cleaning cloth pick-and-place assembly 11 places the cleaning cloth at the upper end of the barrel 26, the barrel cleaning assembly 3 drives the cleaning rod 9 to move down and brings the cleaning cloth into the barrel 26, the cleaning rod 9 moves up and down to clean the barrel 26 and then is moved out, and the next material testing is carried out; and the pressing bar cleaning assembly 8 is used to clean the pressing bar 7, and the clamping assembly 5 moves the cleaned pressing bar 7 onto the pressing assembly 13. Therefore, the above melt flow rate testing device implements automation of feeding, pressing, and cleaning. Manual work is replaced with a machine, which ensures standardization of operation in testing, avoids a phenomenon of great differences in test results due to operations by the same person at different time and by different persons, and makes the test results more accurate.

Specifically, a receiving box can be disposed below the barrel 26 to receive the material from the die. The clamping assembly 5 moves the receiving box onto the weighing assembly 10. When the cleaning rod 9 cleans the barrel 26, the die at the lower end of the barrel 26 can be moved away. After cleaning, the cleaning rod 9 moves down until the cleaning cloth is moved out of a lower opening of the barrel 26 and falls off, and the cleaning rod 9 is moved out of an upper opening of the barrel 26. When the cleaning rod 9 performs cleaning the next time, the cleaning cloth pick-and-place assembly 11 places another clean cleaning cloth at the upper opening of the barrel 26, and the cleaning cloth is pushed into the barrel 26 by a lower end of the cleaning rod 9 for cleaning.

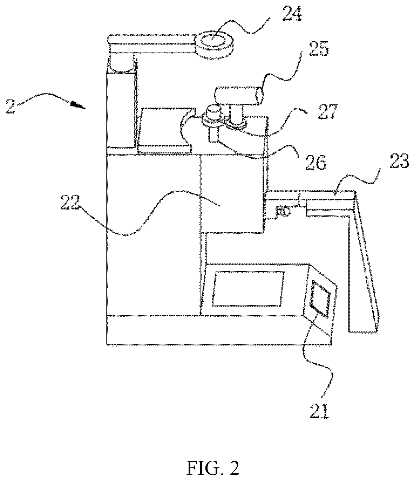

Further, as shown in FIG. 2, the melt flow rate meter 2 includes a control platform 21, where a heating furnace 22 is disposed on the control platform 21, a die baffle insertion-and-extraction cylinder 23 is disposed on one side of the heating furnace 22, a weight loading platform 24 is disposed above the heating furnace 22, a displacement sensor 25 is disposed on an upper surface of the heating furnace 22, the barrel 26 is located in the heating furnace, and the melt flow rate meter 2 further includes a test pressing rod 27 placed in the barrel 26 during testing. The control platform 21 is configured to control a heating temperature of the heating furnace 22, the weight loading platform 24 provides a load and is liftable, the die baffle insertion-and-extraction cylinder 23 is configured to fix the die, and the displacement sensor 25 is configured to measure a descending displacement of the test pressing rod 27.

Further, as shown in FIG. 1, the melt flow rate testing device above further includes a code scanner 14 disposed on the hopper assembly 6, where the code scanner 14 is configured to scan a barcode on a sample and perform information input.

Further, as shown in FIG. 1 to FIG. 3, the clamping assembly 5 includes a pressing bar pick-and-place component 51 and a feeding component 52, where the track driving assembly 4 is configured to drive the pressing bar pick-and-place component 51 to move between the pressing bar cleaning assembly 8 and the pressing assembly 13, and the track driving assembly 4 is further configured to drive the feeding component 52 to move between the hopper assembly 6 and the melt flow rate meter 2;
in addition, the track driving assembly 4 includes two X-axis moving tracks 43 distributed in parallel, where a Y-axis moving track 41 is disposed between the two X-axis moving tracks 43, a Z-axis moving track 42 is disposed on the Y-axis moving track 41, and the pressing bar pick-and-place component 51 and the feeding component 52 are connected to the Z-axis moving track 42 separately, so as to implement movement of the clamping assembly 5 in three-dimensional space by the track driving assembly 4. Specifically, the X-axis moving tracks 43 are fixedly connected to the mounting platform 1, the Y-axis moving track 41 can slide along the X-axis moving tracks 43, the Z-axis moving track 42 can slide along the Y-axis moving track 41, and the clamping assembly 5 can slide in a vertical direction along the Z-axis moving track 42.

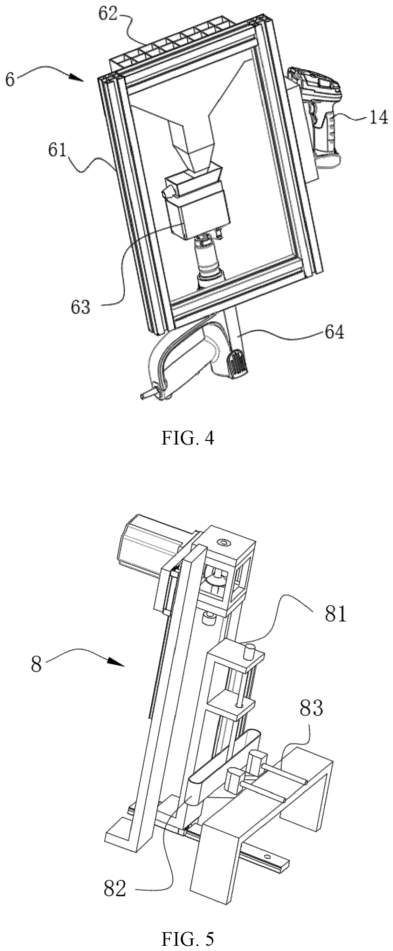

Further, as shown in FIG. 4, the hopper assembly 6 includes a hopper support 61, where a storage hopper group 62 is disposed on the hopper support 61, a feeding hopper 63 is disposed below the storage hopper group 62, and a heating apparatus 64 is disposed below the feeding hopper 63. Specifically, the storage hopper group 62 is configured to store the sample that needs to be detected. When needing to be detected, the sample falls into the feeding hopper 63 from the storage hopper group 62, the heating apparatus 64 heats the feeding hopper 63 to melt the sample, and then the clamping assembly 5 clamps the feeding hopper 63 to the barrel 26, so as to pour the melted sample into the barrel 26.

Further, as shown in FIG. 5, the pressing bar cleaning assembly 8 includes a fixed support 81, a cleaning belt 82, a cleaning belt positioning apparatus 83, and a driving component for driving the cleaning belt 82 to rotate, where the cleaning belt 82 rubs against the pressing bar 7 when rotating to remove the sample adhered on the pressing bar 7.

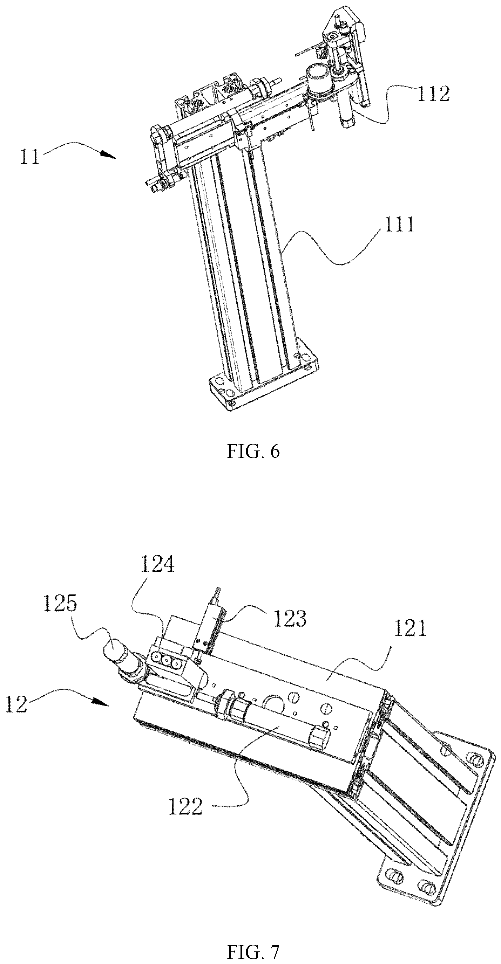

Further, as shown in FIG. 6, the cleaning cloth pick-and-place assembly 11 includes a motion mechanism 111 and a suction cup 112 disposed on the motion mechanism 111, where the suction cup 112 is configured to adsorb cleaning cloth and move the cleaning cloth to the upper end of the barrel 26.

Further, as shown in FIG. 7, the die replacement module 12 includes a die frame 121, where a positioning cylinder 122 is disposed on the die frame 121, a die clamp 124 is disposed at one end of the positioning cylinder 122, an ejection cylinder 123 is disposed on a side surface of the die clamp 124, and a die grabbing apparatus 125 is disposed at one end of the die clamp 124.

Specifically, the ejection cylinder 123 ejects the die from the die clamp 124, and the die is positioned by the positioning cylinder 122 and then grabbed into the barrel 26 by the die gripping apparatus 125 for die replacement.

Further, a placement rack for placing the test pressing rod 27 is further disposed on the mounting platform 1. When the melt flow rate meter 2 does not require testing, the test pressing rod 27 is placed on the placement rack. During testing, the clamping assembly 5 moves the test pressing rod 27 into the barrel 26.

Further, a controller electrically connected to the melt flow rate meter 2, the barrel cleaning assembly 3, the track driving assembly 4, the clamping assembly 5, the pressing bar cleaning assembly 8, the weighing assembly 10, the cleaning cloth pick-and-place assembly 11, the die replacement module 12, and the pressing assembly 13 separately is further disposed on the mounting platform 1. The controller is configured to control motion of each driving component. Scanned information from the code scanner 14 and test-related information can be transmitted to the controller and uploaded to the Internet for a user to check in time.

The working principle of the melt flow rate testing device in this embodiment is as follows:
The melt flow rate meter 2, the barrel cleaning assembly 3, the track driving assembly 4, the code scanner 14, the hopper assembly 6, the pressing bar pick-and-place component 51, the pressing bar cleaning assembly 8, the feeding component 52, the weighing assembly 10, the cleaning cloth pick-and-place assembly 11, the die replacement module 12, and the pressing assembly 13 are fixed on the mounting platform 1, a device is started to check whether all the parts are in normal states, the storage hopper group 62 on the hopper support 61 is taken down, the sample to be tested is placed in each compartment of the storage hopper group 62 by a specified amount, and the code scanner 14 is used to scan and record information of each sample; and the material in one compartment of the storage hopper group 62 is moved down into the feeding hopper 63, and the heating apparatus 64 heats the feeding hopper 63 to melt the sample in the feeding hopper.

A test temperature is set on the control platform 21 in the melt flow rate meter 2, and a test load is prepared and placed on the weight loading platform 24; after the temperature of the barrel 26 is stable, the clamping assembly 5 moves and clamps the feeding hopper 63 to add the material into the barrel 26; during feeding, the pressing assembly 13 drives the pressing rod to compact the material while adding the material; after the sample is added, the clamping assembly 5 resets the feeding hopper 63 and clamps the test pressing rod 27 into the barrel 26. At this time, a system transmits a signal to the melt flow rate meter 2 for starting and time counting.

After time counted by the melt flow rate meter 2 reaches specified time, the clamping assembly 5 places the displacement sensor 25 on a test station, and the weight loading platform 24 on the melt flow rate meter 2 lowers the load. When the sample flows out of the die and the test pressing rod 27 descends to a specified position, a control system for the melt flow rate meter automatically starts testing and automatically cuts the sample. The cut samples are collected using the receiving box and clamped by the clamping assembly 5 onto the weighing assembly 10 for weighing. Weighing results are automatically transmitted to a measured data system and are in one-to-one correspondence with sample input information.

The die baffle insertion-and-extraction cylinder 23 pulls out a die baffle, the test pressing rod 27 presses out the die down, and then the clamping assembly 5 pulls out the test pressing rod 27 and places the test pressing rod on the placement rack.

The motion mechanism 111 in the cleaning cloth pick-and-place assembly 11 drives the cleaning cloth to move by the suction cup 112, and causes the cleaning cloth to move above the barrel 26; the barrel cleaning assembly 3 places down the cleaning rod 9 into the barrel 26, and presses the cleaning cloth into the barrel 26; the cleaning rod 9 moves up and down in an insertion and extraction manner to remove the remaining debris in the barrel 26; and after cleaning, the cleaning rod 9 is taken out.

The die baffle insertion-and-extraction cylinder 23 resets, the ejection cylinder 123 ejects the die from the die clamp 124, the positioning cylinder 122 positions the die, and the die grabbing apparatus 125 grabs the die and places the die into the barrel 26.

The above steps are repeated for next testing.

In summary, an embodiment of the present invention provides a melt flow rate testing device, which implements automation of feeding, pressing, and cleaning; manual work is replaced with a machine, thereby ensuring standardization of test operation in testing, reducing differences in test results due to operations by the same person at different time and by different persons, and making the test results better in repeatability and reproducibility; in addition, due to the use of information technology, the test results can be uploaded automatically in real time, the detection cycle is shorter, the results are more reliable, and customers can check corresponding information in time through the Internet or customize reminders.

The above are only preferred embodiments of the present invention. It should be pointed out that several improvements and replacements may also be made by those of ordinary skill in the art without departing from the technical principle of the present invention, and these improvements and replacements should also be considered as the scope of protection of the present invention.

## Claims

1. A melt flow rate testing device, **characterized in that**, the device comprises a mounting platform (1), a pressing bar (7), and a cleaning rod (9), wherein a melt flow rate meter (2), a barrel cleaning assembly (3), a track driving assembly (4), a hopper assembly (6), a pressing bar cleaning assembly (8), a weighing assembly (10), a cleaning cloth pick-and-place assembly (11), a die replacement module (12), and a pressing assembly (13) are disposed on the mounting platform (1);
the track driving assembly (4) is provided with a clamping assembly (5); and
the melt flow rate meter (2) is provided with a barrel (26) and a die located at a lower end of the barrel (26), the pressing assembly (13) is configured to drive the pressing bar (7) to extend into the barrel (26) during feeding, the barrel cleaning assembly (3) is configured to drive the cleaning rod (9) to extend into the barrel (26) to clean the barrel, and the cleaning cloth pick-and-place assembly (11) is configured to place a cleaning cloth at an upper end of the barrel before the cleaning rod (9) extends into the barrel (26).

2. The melt flow rate testing device according to claim 1, wherein the melt flow rate meter (2) comprises a control platform (21), a heating furnace (22) is disposed on the control platform (21), a die baffle insertion-and-extraction cylinder (23) is disposed on one side of the heating furnace (22), a weight loading platform (24) is disposed above the heating furnace (22), a displacement sensor (25) is disposed on an upper surface of the heating furnace (22), the barrel (26) is located in the heating furnace (22), and the melt flow rate meter (2) further comprises a test pressing rod (27) placed in the barrel (26) during testing.

3. The melt flow rate testing device according to claim 1, further comprising a code scanner (14) disposed on the hopper assembly (6).

4. The melt flow rate testing device according to claim 1, wherein the clamping assembly (5) comprises a pressing bar pick-and-place component (51) and a feeding component (52), the track driving assembly (4) is configured to drive the pressing bar pick-and-place component (51) to move between the pressing bar cleaning assembly (8) and the pressing assembly (13), and the track driving assembly (4) is further configured to drive the feeding component (52) to move between the hopper assembly (6) and the melt flow rate meter (2); and
the track driving assembly (4) comprises two X-axis moving tracks (43) distributed in parallel, a Y-axis moving track (41) is disposed between the two X-axis moving tracks (43), a Z-axis moving track (42) is disposed on the Y-axis moving track (41), and the pressing bar pick-and-place component (51) and the feeding component (52) are connected to the Z-axis moving track (42) separately.

5. The melt flow rate testing device according to claim 1, wherein the hopper assembly (6) comprises a hopper support (61), a storage hopper group (62) is disposed on the hopper support (61), a feeding hopper (63) is disposed below the storage hopper group (62), and a heating apparatus (64) is disposed below the feeding hopper (63).

6. The melt flow rate testing device according to claim 1, wherein the pressing bar cleaning assembly (8) comprises a fixed support (81), a cleaning belt (82), a cleaning belt positioning apparatus (83), and a driving component for driving the cleaning belt (82) to rotate.

7. The melt flow rate testing device according to claim 1, wherein the cleaning cloth pick-and-place assembly (11) comprises a motion mechanism (111) and a suction cup (112) disposed on the motion mechanism (111).

8. The melt flow rate testing device according to claim 1, wherein the die replacement module (12) comprises a die frame (121), a positioning cylinder (122) is disposed on the die frame (121), a die clamp (124) is disposed at one end of the positioning cylinder (122), an ejection cylinder (123) is disposed on a side surface of the die clamp (124), and a die grabbing apparatus (125) is disposed at one end of the die clamp (124).

9. The melt flow rate testing device according to claim 2, wherein a placement rack for placing the test pressing rod (27) is further disposed on the mounting platform (1).

10. The melt flow rate testing device according to claim 1, wherein the mounting platform (1) is further provided with a controller electrically connected to the melt flow rate meter (2), the barrel cleaning assembly (3), the track driving assembly (4), the clamping assembly (5), the pressing bar cleaning assembly (8), the weighing assembly (10), the cleaning cloth pick-and-place assembly (11), the die replacement module (12), and the pressing assembly (13), respectively.
